# EUROPEAN PATENT APPLICATION

(11) **EP 4 696 669 A1**
(43) Date of publication of application: **18.02.2026**
(21) Application number: 24194163.2
(22) Date of filing: 12.08.2024
(51) Int. Cl.: C04B 28/04, C04B 18/10

(54) **TILE ADHESIVE COMPOSITION COMPRISING BIOCHAR AND SLAG**

(71) Applicant: Sika Technology AG, 6340 Baar (CH)
(72) Inventor: BAEURLE, Ulrich, 86159 Augsburg (DE); EHLE, Alexander, 86159 Augsburg (DE); MUELLER, Torsten, 86159 Augsburg (DE); STOHR, Werner, 86159 Augsburg (DE)
(74) Representative: Sika Patent Attorneys

(57) **Abstract**

The present invention relates to a high-performance tile adhesive composition comprising Portland cement, slag, at least one aggregate and biochar, wherein the weight ratio of biochar to slag is between 0.16 and 0.5 to 1, preferably between 0.16 and 0.3 to 1, most preferably between 0.16 and 0.2 to 1.

## Description

### Technical Field

The present invention relates to a high-performance tile adhesive composition comprising Portland cement, slag, at least one aggregate and biochar, wherein the weight ratio of biochar to slag is between 0.16 and 0.5 to 1, preferably between 0.16 and 0.3 to 1, most preferably between 0.16 and 0.2 to 1.

### Background of the invention

In recent years, the construction industry has dedicated substantial resources to investigating methods for decarbonizing its products and processes. To diminish the carbon footprint of their formulations, mortar developers and concrete manufacturers seek raw materials with a reduced carbon footprint or, ideally, materials with carbon-sinking potential. What is meant by carbon-sinking potential is that these raw materials absorb more CO₂ in their lifetime than they release to the atmosphere. Biochar is an example of material with a carbon-sinking potential.

One specific example of carbon footprint reduction in the construction industry is the use of tile adhesives with a reduced Global Warming Potential (GWP). Currently, such adhesives are being developed by, at least partially, replacing Portland cement with secondary cementitious materials (SCM), having a lower carbon footprint, such as fly ash, slag, silica fume or metakaolin.

However, in most cases, such replacements lead to the deterioration of certain properties, such as workability, strength or adhesion. Furthermore, enriching the cementitious composition with biochar intensifies this deterioration. When formulating a tile adhesive composition, only a specific selection and combination of Portland cement, supplementary cementitious materials (SCMs) and biochar can result in a cementitious tile adhesive that meets the requirements for its intended use. This is particularly relevant when formulating a tile adhesive composition for tiles with a low water absorption (≤ 0.5 %, measured according to EN ISO 10545-3:2018), for example porcelain tiles.

Therefore, there is still a need for a high-performance tile adhesive composition with a reduced carbon footprint.

### Summary of the invention

It is an objective of the present invention to provide a high-performance cementitious tile adhesive composition, in particular a cementitious tile adhesive composition with a decreased carbon footprint.

It has surprisingly been found that the objective of the present invention is solved by the subject matter of claim 1. It is thus at the core of the present invention to use a combination of biochar and slag to reduce a carbon footprint of a cementitious tile adhesive composition.

Further aspects of the present invention are the subject of independent claims. Preferred embodiments are the subject matter of dependent claims.

### Ways to carry out the invention

In a first aspect the present invention relates to a cementitious tile adhesive composition comprising:
a) Portland cement;
b) slag;
c) at least one aggregate;
d) biochar,
e) wherein the weight ratio of biochar to slag is between 0.16 and 0.5 to 1, preferably between 0.16 and 0.3 to 1, most preferably between 0.16 and 0.2 to 1.

In this context, "tiles" are in particular sheets of wear-resistant materials such as ceramics, stones, metals and/ or glass. Typically, tiles are used to cover roofs, floors, walls and/ or showers.

In particular, the cementitious adhesive composition is present as a dry mixture. This means that the adhesive composition is substantially free of water or comprises water in an amount of less than 1 wt. %, in particular less than 0.5 wt. % or less than 0.1 wt. %, relative to the total dry weight of the cementitious adhesive composition. According to a preferred embodiment, the cement-based adhesive composition is a one component mixture. This means that all individual materials and/ or substances are mixed. One-component compositions are particularly easy to handle and eliminate the risk of user confusion or mis-dosing of the various components.

Within the present context, the Portland cement, also called Ordinary Portland Cement (OPC), is a CEM I under standard DIN 197-1:2011. However, other OPC classified, for example, under the relevant ASTM, JIS or Chinese standards is also suitable. According to further embodiments, the OPC is a white cement. White cements can be preferred within the present context as they have a lower water demand.

Slag, within the present context, especially is iron making slag and/or steelmaking slag. Steel making slag within the present context is a by-product from the steelmaking process. Steel making slag is obtained for example in the Thomas process, the Linz-Donawitz process, the Siemens-Martin process or the electric arc furnace when iron is converted to steel. A very preferred type of steel making slag within the present context is basic oxygen furnace slag (BOF), also called basic oxygen slag (BOS). One type of iron making slag is GGBS (also called GGBFS). A ground granulated blast furnace slag (GGBS) within the present context is obtained by quenching molten iron slag from a blast furnace in water or steam, to produce a glassy, granular product that is then dried and ground into a fine powder.

According to preferable embodiments, GGBS has a Blaine fineness of between 2000 - 12000 cm²/g, preferably between 3500 - 6000 cm²/g or 6000 - 8000 cm²/g. Blaine fineness can be measured according to standard EN 196-6:2018.

Biochar, in the present context, is a carbon-rich product that remains after biomass is thermodynamically converted in the absence or limited presence of oxygen (a process known as pyrolysis). Through pyrolysis, the carbon stored in the biomass becomes locked in the biochar. The biomass used to produce biochar of the present invention is preferably sourced from a biomass waste, for example fruits pits, coconuts shells, common wood chips, waste wood, washed coffee husks, coffee pomace, lemon pomace, sliced hemp straw, paper waste, chicken droppings, hemp clay mixture, hemp waste or mixed waste.

According to preferable embodiments, biochar has a density which is lower than a density of a standard tile adhesive. In particular, the biochar has a density which is lower than the density of the cementitious tile adhesive but without biochar. Therefore, adhesive composition comprising biochar results in a higher surface coverage than the same composition but without biochar. The density of biochar can be measured by helium pycnometry as described in the standard ISO 12154:2014.

Biochar, within the context of the present invention, is used as a light weight filler.

Fillers, within the present context, are mineral additions of low particle size that have no cementitious properties.

According to embodiments, the biochar is obtained by pyrolysis, preferably by slow pyrolysis, of woody biomass, herbaceous biomass, agricultural biomass, waste biomass, or manure biomass.

Slow pyrolysis, in the present context, relates to pyrolysis process which operates at lower heating rates and longer residence times, typically between hours to days, than the fast pyrolysis. Therefore, it favours the production of solid biochar. This process involves the gradual heating of the feedstock to temperatures ranging from 300 °C to 700 °C, ensuring a more controlled and complete conversion of the material. Slow pyrolysis is recognized for its ability to enhance carbon sequestration.

Slow pyrolysis can be performed in specialized reactors designed for thermochemical conversion, such as fixed-bed, rotary kiln, or auger reactors, which are suitable for processing various types of biomass or organic waste materials.

According to embodiments, the biochar is obtained by pyrolysis at the temperature of at least 400 °C, preferably at least 500 °C, more preferably at least 600 °C, most preferably at least 700 °C.

Pyrolysis temperature is the key factor determining the surface area and porosity of biochar. Higher pyrolysis temperatures result in biochar with increased porosity and larger surface area, enhancing its effectiveness for various applications, such as carbon sequestration.

According to embodiments, the biochar has an average particle size D50 between 0.0001 mm and 0.5 mm, preferably between 0.1001 mm and 0.5 mm, more preferably between 0.1001 mm and 0.4 mm, most preferably between 0.2 mm and 0.4 mm, as determined by sieve analysis according to EN 12192-1:2002 or EN 933-1:2012.

Biochar with an average particle size D50 between 0.1001 mm and 0.5 mm, most preferably between 0.1001 mm and 0.4 mm, might be advantages over biochar with a smaller particle size, as it reduces dust generation, making handling and mixing of the adhesive composition safer and cleaner. Additionally, smaller particles of biochar require more processing steps, leading to increased energy consumption and potentially higher costs, which can contribute to a negative environmental impact compared to larger particle sizes. Therefore, opting for larger particle sizes can offer both practical and environmental benefits.

According to embodiments, the surface of biochar is treated, preferably functionalized.

Surface treatment, in the present context, refers to various processes and techniques applied to modify the surface properties of biochar to enhance its performance for specific applications. The primary objectives of surface treatment are to increase the adsorption capacity and improve the stability of biochar, as well as introduce functional groups that can interact with other substances. Examples of common surface treatment methods include chemical activation, physical activation, biological treatment, surface coating and functionalization.

According to embodiments, surface treatment of biochar involves surface coating with mineral oil. Such treatment leads to reduced dust generation.

Functionalization, in the present context, involves chemically or physically modifying the surface of biochar to introduce specific functional groups (for example carboxyl, hydroxyl, amine, thiol) or generate molecular dipoles that enhance its reactivity and adsorption capacity for target molecules. This process aims to tailor the biochar's properties to improve its performance, for example increase mechanical strength of the composite, reduce dust formation, further improve electrical conductivity, increase fire resistance and/ or improve thermal conductivity. Functionalization can be achieved through treatments with acids, bases, oxidizing agents, or other chemical reagents. For example, the surface of biochar can be functionalized with silane coupling agents, ionic surfactants and/ or nonionic surfactants.

A preferred biochar of the present invention has a density of between 1.0 - 2.0 g/cm³, preferably 1.3 - 1.8 g/cm³, measured by helium pycnometry.

According to preferred embodiments, a cementitious tile adhesive composition comprises, relative to the total dry weight of the cementitious tile adhesive composition:
a) 5 to 30 wt. %, preferably 10 to 20 wt. %, most preferably 15 to 20 wt. % of Portland cement;
b) 10 to 30 wt. %, preferably 20 to 30 wt. %, most preferably 20 to 25 wt. % of slag;
b) 40 to 70 wt. %, preferably 45 to 60 wt. %, most preferably 45 to 50 wt. % of at least one aggregate;
c) 0.5 to 10 wt. %, preferably 2 to 8 wt. %, most preferably 3 to 6 wt. % of biochar.

According to further preferred embodiments, a cementitious tile adhesive composition comprises:
a) Portland cement;
b) slag;
b) at least one aggregate;
c) biochar,
wherein the bulk density ratio of Portland cement and slag to aggregates is between 7:3 to 3:7, wherein the bulk density is measured with the apparatus described in DIN EN 459-2:2021, chapter 7.3, "Einlaufgerat nach Böhme".

According to preferred embodiments, a cementitious tile adhesive composition of the present invention has a reduced carbon footprint in comparison to the same cementitious tile adhesive composition, having more aggregates instead of biochar.

Carbon footprint refers to the total amount of greenhouse gases, primarily carbon dioxide, emitted directly or indirectly by a product or process, measured over its entire lifecycle. Carbon footprint can, for example, be calculated as CO₂ equivalents (CO₂ eq.) per kilogram.

The Global Warming Potential (GWP) was developed to enable the comparison of the global warming effects of various gases. It quantifies how much energy the emissions of 1 ton of a particular gas will absorb over a specified period, compared to the emissions of 1 ton of CO₂. In other words, GWP is a metric used within various carbon footprint measurement methods to compare the impacts of different greenhouse gases.

According to embodiments, the cementitious tile adhesive further comprises at least one alkaline activator, preferably alkali metal carbonate, alkali metal hydroxide, alkaline-earth metal hydroxide, alkaline-earth metal oxide, alkaline-earth metal formate, alkali metal silicate, alkali metal sulphate, alkali metal chloride or mixture thereof.

According to preferable embodiments, the activator comprises quick lime.

According to embodiments, the cementitious tile adhesive composition further comprises at least one admixture, wherein said admixture is selected from plasticizers, thickeners, retarders, air-entrainers, accelerators, anti-caking agents, antioxidants, de-aerating agents, defoamers, corrosion inhibitors, expansion producing additives, pigments, strength enhancers, waterproofing additives, alkali-aggregate reaction inhibitors, chromate reducers, and/or anti-microbial agents.

Suitable thickeners can be any known to the person skilled in the art. Examples include cellulose ethers, polyacrylamides and alkali swellable polymers.

According to further embodiments, the cementitious tile adhesive composition further comprises a cellulose ether selected from the group consisting of hydroxymethylcellulose, hydroxyethylcellulose, hydroxypropylmethylcellulose, hydroxyethylmethylcellulose and / or carboxymethyl cellulose, preferably hydroxypropyl methylcellulose and / or hydroxyethyl methylcellulose.

According to a preferred embodiment, the amount of cellulose ether is from 0.05 to 3 wt. %, in particular from 0.1 to 1 wt. %, especially from 0.2 to 0.6 wt. %, relative to the total dry weight of the adhesive composition.

According to further embodiments, the cementitious tile adhesive composition further comprises a de-dusting agent. De-dusting agents for cementitious tile adhesives are used to reduce airborne dust during mixing and application, enhancing worker safety and site cleanliness. These agents also help improve the workability and consistency of the adhesive, ensuring a more efficient and effective installation process. Preferably, such de-dusting agent is a refined paraffin wax.

According to embodiments, the aggregate is selected from at least one of limestone, granite, marble, basalt, olivine, aluminum oxide, sand or a combination thereof, preferably sand.

The term aggregate as used in the context of the present invention refers to mineral materials that are non-reactive in the hydration reaction of cementitious binders. Aggregates can be any aggregate typically used for cementitious materials such as concrete, mortars, screeds, renders, grouts, coatings, putties or the like. Typical aggregates are for example rock, crushed stone, gravel, slag, limestone, sand, recycled concrete, perlite or vermiculite.

The average particle size of the aggregate is preferably between 0.063 mm and 4 mm, more preferably between 0.063 mm and 2 mm, most preferably between 0.063 mm and 1 mm, as determined by the sieve analysis according to EN 12192-1:2002 or EN 933-1:2012. However, other aggregates can also be used for specific purposes.

According to embodiments, the slag is a blast furnace slag, most preferably granulated blast furnace slag or ground granulated blast furnace slag.

According to embodiments, the weight ratio of Portland cement to slag is between 0.2 and 2 to 1, preferably between 0.4 and 1.2 to 1, more preferably between 0.4 and 1 to 1, most preferably between 0.8 and 0.99 to 1.

According to embodiments, the initial tensile adhesion strength of such cementitious tile adhesive composition measured according to DIN EN 12004-1:2017 is at least 0.5 N/mm², preferably at least 1 N/mm², most preferably at least 1.2 N/mm².

All features and embodiments as described above, also apply to this aspect.

In another aspect the present invention relates to a processable composition comprising the cementitious tile adhesive composition of the present invention and water, wherein the weight ratio of water to adhesive composition is in the range from 0.2 to 0.5, preferably from 0.3 to 0.45.

Processable composition, in the present context, means an adhesive composition that is ready to be applied to a support element, such as a floor structure, to secure a cover element, such as a tile. In particular, the processable composition is in the initial stage of curing of the cementitious binder.

In particular, the processable composition has an air content of from 0 to 5%, in particular from 0.1 to 3%. For example, the air content is measured according to DIN EN 1015-7:1998.

All features and embodiments as described above, also apply to this aspect.

In another aspect the present invention relates to a structure, in particular a floor, a wall or a ceiling, comprising a cover element, in particular a tile, whereby the cover element is fixed to the structure with a hardened composition according to the present invention.

All features and embodiments as described above, also apply to this aspect.

In another aspect the present invention relates to the use of the cementitious tile adhesive composition of the present invention for tiles with surface dimensions of at least 300 × 300 mm, preferably at least 600 × 600 mm.

The use for tiles, in the present context, means that the tiles are adhered to a surface by a cementitious tile adhesive.

Large format tiles, typically at least 300 × 300 mm in size, are commonly used in both residential and commercial settings. They are particularly popular in modern interior design for flooring and wall application. Their larger size can create a seamless and visually appealing look while reducing grout lines for a cleaner aesthetic. However, large format tiles require a tile adhesive with a tensile adhesion of at least 1 N/mm².

All features and embodiments as described above, also apply to this aspect.

In another aspect the present invention relates to the use of the cementitious tile adhesive composition of the present invention for tiles with a water absorption of ≤ 0.5 % measured according to EN ISO 10545-3:2018, for example porcelain tiles.

All features and embodiments as described above, also apply to this aspect.

### Experimental part

Table 1 shows a cementitious tile adhesive composition of the present invention. The composition has been prepared by intermixing all of the components in a dry state.

**Table 1: Tile adhesives formulation of the present invention; all values given in [g].**

| **Example** | **1-1** |
|---|---|
| CEM I, 52.5 R | 500 |
| GGBS | 529 |
| Quartz sand, 0.1 - 0.3 mm | 1211.94 |
| Thickener | 10 |
| Alkaline activator | 46 |
| Biochar (0.1 - 0.4 mm) | 100.59 |
| Additives, etc. | 192.61 |

The tile adhesive composition 1-1 has been mixed with water (weight ratio of water to total weight of dry adhesive composition was 0.4) in order to obtain a processable composition.

The obtained processable composition was then used for adhesion tests according to EN 12004-1/2:2017. The results of tensile adhesion strength extended open time and slip are presented in Table 2.

The carbon footprint of the adhesive compositions disclosed in Table 1 was assessed based on the carbon sequestration potential of 2.58 g of CO₂ per g of biochar (corresponding to 85% fixed carbon in biochar). The Global Warming Potential (GWP) value of the inventive tile adhesive, including biogenic emissions, was 0.2744 kg CO_{2 eq}./ kg tile adhesive. The GWP was also calculated for the same formulation but comprising additional 100.59 g of sand instead of biochar and amounted to 0.3605 kg CO_{2 eq}./ kg tile adhesive.

**Table 2: Result of inventive tile adhesive specimen (1-1).**

| **Example** | **1-1** |
|---|---|
| Initial tensile adhesion strength [N/mm²] | 1.27 |
| Initial tensile adhesion strength after water immersion [N/mm²] | 1.21 |
| Initial tensile adhesion strength after heat ageing [N/mm²] | 1.39 |
| Extended open time: tensile adhesion strength | 0.69 |
| Slip (area weight: 50 kg/m²) [mm] | 8 |

The inventive cementitious tile adhesive composition fulfills the requirements of EN 12004-1/2:2017 for a C2TE tile adhesive. Additionally, its Global warming Potential, including biogenic emissions, is reduced by 24% in comparison to the same formulation but with more sand instead of biochar.

## Claims

1. A cementitious tile adhesive composition comprising:
a) Portland cement;
b) slag;
c) at least one aggregate;
d) biochar,
e) wherein the weight ratio of biochar to slag is between 0.16 and 0.5 to 1, preferably between 0.16 and 0.3 to 1, most preferably between 0.16 and 0.2 to 1.

2. The cementitious tile adhesive composition according to claim 1, **characterized in that** it further comprises at least one alkaline activator, preferably alkali metal carbonate, alkali metal hydroxide, alkaline-earth metal hydroxide, alkaline-earth metal oxide, alkaline-earth metal formate, alkali metal silicate, alkali metal sulphate, alkali metal chloride or mixture thereof.

3. The cementitious tile adhesive composition according to at least one of claims 1 or 2, **characterized in that** the aggregate is selected from at least one of limestone, granite, marble, basalt, olivine, aluminum oxide, expanded glass, expanded perlite, sand or a combination thereof, preferably sand.

4. The cementitious tile adhesive composition according to at least one of the preceding claims, **characterized in that** the biochar has an average particle size D50 between 0.0001 mm and 0.5 mm, preferably between 0.1001 mm and 0.5 mm, more preferably between 0.1001 mm and 0.4 mm, most preferably between 0.2 mm and 0.4 mm, as determined by sieve analysis according to EN 12192-1:2002 or EN 933-1:2012.

5. The cementitious tile adhesive composition according to at least one of the preceding claims, **characterized in that** the biochar is obtained by pyrolysis, preferably by slow pyrolysis, of woody biomass, herbaceous biomass, agricultural biomass, waste biomass, or manure biomass.

6. The cementitious tile adhesive composition according to at least one of the preceding claims, **characterized in that** the biochar is obtained by pyrolysis at the temperature of at least 400 °C, preferably at least 500 °C, more preferably at least 600 °C, most preferably at least 700 °C.

7. The cementitious tile adhesive composition according to at least one of the preceding claims, **characterized in that** the slag is a blast furnace slag, most preferably granulated blast furnace slag or ground granulated blast furnace slag.

8. The cementitious tile adhesive composition according to at least one of the preceding claims, **characterized in that** the weight ratio of Portland cement to slag is between 0.2 and 2 to 1, preferably between 0.4 and 1.2 to 1, more preferably between 0.4 and 1 to 1, most preferably between 0.8 and 0.99 to 1.

9. The cementitious tile adhesive composition according to at least one of the preceding claims, **characterized in that** the surface of biochar is treated, preferably functionalized.

10. The cementitious tile adhesive composition according to any of the preceding claims, **characterized in that** the initial tensile adhesion strength of such adhesive composition measured according to DIN EN 12004-1:2017 is at least 0.5 N/mm², preferably at least 1 N/mm², most preferably at least 1.2 N/mm².

11. A processable composition comprising the cementitious tile adhesive composition according to any of the preceding claims and water, wherein the weight ratio of water to cementitious adhesive composition is in the range from 0.2 to 0.5, preferably from 0.3 to 0.45.

12. A structure, in particular a floor, a wall or a ceiling, comprising a cover element, in particular a tile, whereby the cover element is fixed to the structure with a hardened composition according to claim 11.

13. A use of the tile adhesive composition according to any of claims 1 - 10 for tiles with surface dimensions of at least 300 × 300 mm, preferably at least 600 × 600 mm.

14. A use of the tile adhesive composition according to any of claims 1 - 10 for tiles with a water absorption of ≤ 0.5 % measured according to EN ISO 10545-3:2018, for example porcelain tiles.
